# EUROPÄISCHE PATENTSCHRIFT

(11) **EP 2 365 460 B1**
(45) Veröffentlichungstag und Bekanntmachung des Hinweises auf die Patenterteilung: **04.07.2012**
(21) Anmeldenummer: 11169644.9
(22) Anmeldetag: 27.01.2009
(51) Int. Cl.: G06F 21/00, G07F 7/10, H04W 12/12, G09G 3/36, G06K 19/00, G06F 3/14, G07F 19/00, G07G 1/01, G09F 9/30, H04L 29/06, G02F 1/13

(54) **Anzeigen einer Nutzinformation auf einem Anzeigeelement**
DISPLAYING USEFUL INFORMATION ON A DISPLAY ELEMENT
AFFICHAGE D'UNE INFORMATION UTILE SUR UN ÉLÉMENT D'AFFICHAGE

(30) Priorität: 29.01.2008 DE 102008006532
(43) Veröffentlichungstag der Anmeldung: 14.09.2011
(62) Teilanmeldung aus: 09706782.1
(73) Patentinhaber: Giesecke & Devrient GmbH, 81677 München (DE)
(72) Erfinder: Baldischweiler, Michael, 81825 München (DE)
(74) Vertreter: Klunker . Schmitt-Nilson . Hirsch

(56) Entgegenhaltungen:
- WO-A-2008/094890
- DE-A1- 10 317 257
- US-A1- 2004 069 853

## Beschreibung

Die vorliegende Erfindung betrifft ein Verfahren zum Anzeigen einer Nutzinformation auf einem Anzeigeelement einer Endgeräteinrichtung, einen portablen Datenträger, der ein Erkennen der Nutzinformation durch einen Betrachter des Anzeigeelements ermöglicht, sowie eine derartige Endgeräteinrichtung.

Für vielerlei elektronische Anwendungen ist es essenziell, dass ein Betrachter eines Computer- oder Laptop-Bildschirms oder eines LCD-Anzeigeelements eines Telekommunikationsendgeräts oder dergleichen sicher davon ausgehen kann, dass die ihm angezeigte Information unmanipuliert ist und von einer vertrauenswürdigen Stelle stammt. Dies gilt beispielsweise für Kennungen und Passwörter, z.B. Einmalpasswörter, die dem Betrachter des betreffenden Anzeigeelements einen Zugang zu einem gesicherten Bereich, z.B. einem Konto oder dergleichen, verschaffen, oder für Transaktionsbeträge oder dergleichen, die auf einem Anzeigeelement eines Transaktionsgeräts, z. B. einem Geldautomat, angezeigt werden.

Bei der Anzeige einer derartigen Nutzinformationen auf einem Anzeigeelement einer Endgeräteinrichtung besteht jedoch zumeist das Problem, dass das Anzeigeelement von einem Treiber bzw. einem Betriebssystem der Endgeräteinrichtung aktiviert und gesteuert wird und der Datenverkehr einer solchen Betriebssoftware nicht gesondert gesichert ist. Deshalb besteht prinzipiell die Möglichkeit eines so genannten "Man-in-the-Middle"-Angriffs, bei dem sich ein Angreifer zwischen das Anzeigeelement und die Betriebssoftware schaltet und dadurch in der Lage ist, eine anzuzeigende Nutzinformation auszulesen und/ oder durch eine manipulierte Information zu ersetzen.

Die DE 10317 257 A1 offenbart einen kontaktlosen Datenträger mit einer Leuchtdiode, bei dem eine Voraussetzung für eine kontaktlose Datenkommunikation mit einem Lesegerät eine willentliche Benutzung des kontaktlosen Datenträgers durch den Besitzer ist. Diese wird durch den Empfang eines optischen Signals des Datenträgers durch das Lesegerät festgestellt, was darauf hinweist, dass sich der Datenträger zumindest nicht abgedeckt in einer Tasche oder dergleichen befindet. Die Vertrauenswürdigkeit einer auf einem Anzeigeelement des Lesegeräts angezeigten Information kann dadurch jedoch nicht sichergestellt oder beurteilt werden.

Es ist demzufolge die Aufgabe der vorliegenden Erfindung, eine sichere Anzeige einer vertrauenswürdigen Nutzinformation auf einem Anzeigeelement sicherzustellen und die Authentizität der Nutzinformation zu gewährleisten.

Diese Aufgabe wird durch ein Verfahren mit den Merkmalen des unabhängigen Anspruchs 1, einen portablen Datenträger mit den Merkmalen des unabhängigen Anspruchs 13 sowie eine Endgeräteinrichtung mit den Merkmalen des abhängigen Anspruchs 15 gelöst. Vorteilhafte Ausgestaltungen und Weiterbildungen sind in den abhängigen Ansprüche 2-12 und 14 angegeben.

Bei einem erfindungsgemäßen Verfahren werden auf einem Anzeigeelement einer Endgeräteinrichtung Anzeigedaten angezeigt, die die Nutzinformation umfassen. Durch einen portablen Datenträger werden Lichtsignale an das Anzeigeelement ausgesendet, wobei die Anzeigedaten derart auf dem Anzeigeelement angezeigt und die Lichtsignale derart an das Anzeigeelement ausgesendet werden, dass ein Betrachter des Anzeigeelements die Nutzinformation erkennen kann. Hierbei sind die Anzeigedaten derart ausgestaltet, dass deren Nutzinformation ohne das Aussenden von Lichtsignalen an das Anzeigeelement für einen Betrachter des Anzeigeelements nicht erkennbar ist.

Ein entsprechender portabler Datenträger umfasst eine Schnittstelle zur Verbindung mit der Endgeräteinrichtung sowie eine Lichtsignaleinheit, welche die für das Anzeigeelement der Endgeräteinrichtung bestimmten Lichtsignale derart aussendet, dass ein Anzeigen der Anzeigedaten auf dem Anzeigeelement bewirkt wird, so das ein Betrachter die Nutzinformation erkennen kann. Hierbei wird unter dem Begriff "Lichtsignal" das gesamte elektromagnetische Wellenspektrum bzw. ein beliebiger Ausschnitt daraus verstanden.

Die Erfindung ermöglicht einen zweifachen Schutz der Nutzinformation. Einerseits ist ein unbefugtes, elektronisches Ausspähen der Nutzinformation, z.B. im Rahmen eines "Man in the Middle"-Angriffs nicht möglich, da auf diesem Wege nur die Anzeigeinformation ausgespäht werden kann, nicht aber die Lichtsignale, welche aber notwendig sind, um die in die Anzeigedaten eingebettete Nutzinformation erkennbar zu machen, da die Nutzinformation nur durch das vorgesehene Senden der Lichtsignale dekodierbar ist. Andererseits kann die Authentizität der Nutzinformation und der entsprechenden Nutzinformationsquelle sichergestellt werden, da die Nutzinformation nur mit Lichtsignalen erkennbar gemacht werden kann, die von der Nutzinformationsquelle vorgegeben bzw. autorisiert wurden. Eine darüber hinausführende komplexe, z.B. kryptographische, Sicherheitsinfrastruktur ist nicht notwendig.

Neben der Nutzinformation umfassen die Anzeigedaten eine Störinformation, die beim Anzeigen der Anzeigedaten bewirkt, dass die Nutzinformation ohne Aussenden der Lichtsignale von einem Betrachter nicht erkannt oder zumindest nicht von der Störinformation unterscheiden werden kann. Demzufolge muss das Anzeigen der Anzeigedaten und das Aussenden der Lichtsignale derart aufeinander abgestimmt sein, dass die Störinformation durch die von der Lichtsignaleinheit ausgesendeten Lichtsignale aus den angezeigten Anzeigedaten ausgeblendet wird.

Da die Lichtsignale also auf die genaue Art der Einbettung der Nutzinformation in die Anzeigedaten abgestimmt sein müssen, muss die Nutzinformationsquelle auch die Lichtsignale vorgeben. Deshalb kann sobald eine Nutzinformation von Lichtsignalen auf dem Anzeigeelement erkennbar gemacht wird ist davon ausgegangen werden, dass die Nutzinformation von der Nutzinformationsquelle stammt und nicht von einem Angreifer.

Es gibt erfindungsgemäß zwei Möglichkeiten, die Lichtsignale an das Anzeigeelement auszusenden: Einerseits können die Lichtsignale in eine optische Schnittstelle der Endgeräteinrichtung eingespeist werden, um dort eine Ansteuerung des Anzeigeelements zu beeinflussen; andererseits kann das Anzeigeelement direkt mit den Lichtsignalen beleuchtet werden.

Im erstgenannten Fall kann das Anzeigeelement z.B. eine LCD-Segmentanzeige sein, die schwarze Zeichen auf weißem Hintergrund darstellt, wobei die Störinformation ausgeblendet wird, indem die von der Lichtsignaleinheit in eine optische Schnittstelle der Endgeräteinrichtung eingespeisten Lichtsignale eine schwarze Darstellung des Anzeigehintergrunds des LCD-Anzeigeelements bewirken, so dass die Störinformation ausgeblendet wird, während die Nutzinformation erkennbar bleibt. Bei einer LCD-Segmentanzeige, die Zeichen grauwertig oder farbig anzeigt, kann die Störinformation durch eine entsprechende grauwertige/farbige Hintergrunddarstellung ausgeblendet werden.

Im letztgenannten Fall bewirkt das gezielte direkte Beleuchten des Anzeigeelements mit Lichtsignalen, dass eine angezeigte Störinformation ausgeblendet wird. Falls das Anzeigeelement z.B. ein Farbanzeigeelement und die Lichtsignaleinheit eine farbige Beleuchtungsquelle ist, wird das Farbanzeigeelement mit Farblichtsignalen beleuchtet, die derart auf die Darstellungsfarben der Störinformation oder der Nutzinformation abgestimmt sind, dass entweder die Störinformation nicht mehr erkennbar ist oder die Nutzinformation betont und dadurch erkennbar wird. Dies kann durch eine additive oder subtraktive Farbmischung der Darstellungsfarbe und er Lichtsignalfarbe erreicht werden, indem eine Störinformation, die in einem unbeleuchteten Zustand vor ihrem Hintergrund erkennbar ist, durch eine Farbmischung mit entsprechenden Farblichtsignalen die gleiche Farbe annimmt, wie der jeweilige Hintergrund. Bei der Nutzinformation kann die farbige Beleuchtungsquelle ganz ausgeschaltet werden oder in einer Farbe das Anzeigeelement beleuchten, die keinen derartigen ausblendenden Farbmischeffekt hat.

Das Anzeigeelement kann auch mit einer optisch aktivierbaren Folie bedeckt sein, während die Lichtsignaleinheit eine Infrarot-Beleuchtungsquelle ist, die die Folie in einen aktivierten Zustand überführt. Bei Beleuchtung mit Infrarot-Lichtsignal wird dann die ansonsten optisch durchlässige Folie undurchlässig, so dass Störinformation ausgeblendet werden kann. Umgekehrt ist es auch möglich, dass eine ansonsten optisch undurchlässige Folie durch eine geeignete Beleuchtung für eine Nutzinformation optisch durchlässig wird. In jedem Falle wird die Folie derart mit Infrarot-Lichtsignalen beleuchtet, dass entweder die Störinformation aktiv ausgeblendet wird oder die Nutzinformation aktiv erkennbar gemacht wird.

Die Lichtsignaleinheit umfasst vorzugsweise zumindest eine Leuchtdiode oder dergleichen, um die Lichtsignale entweder über eine optische Schnittstelle in die Endgeräteinrichtung einzuspeisen oder um das Anzeigeelement direkt zu beleuchten. Die Lichtsignaleinheit kann auch mehrere Leuchtdioden umfassen, die Licht verschiedener Wellenlängen emittieren, um farbige Lichtsignale für Farbmischeffekte zu erzeugen.

Um den erfindungsgemäßen Effekt zu erzielen, ist die Nutzinformation in einer bestimmten Weise in die Anzeigedaten eingebettet, so dass die Nutzinformation beim Anzeigen der Anzeigedaten derart moduliert wird, dass ein Betrachter des Anzeigeelements ohne ein Aussenden von Lichtsignalen die Nutzinformation nicht erkennen kann, weil entweder die Nutzinformation nicht von der Störinformation unterscheidbar oder gar keine reproduzierbare Information erkennbar ist. Die Lichtsignale werden also derart ausgesendet, dass die Nutzinformation demoduliert und erkennbar wird.

Vorzugsweise bestehen die Anzeigedaten aus einer Vielzahl von zeitlich aufeinanderfolgend (d.h. sequenziell) angezeigten Stör- und Nutzinformationen. Abgestimmt darauf werden die Lichtsignale von der Lichtsignaleinheit in Form von sequenziellen Lichtimpulsen an das Anzeigeelement ausgesendet, so dass die zeitlich modulierte Nutzinformation zeitlich demoduliert und somit erkennbar wird. Die Lichtimpulse werden dann in den gleichen zeitlichen Intervallen bzw. in der gleichen Frequenz ausgesendet, in denen die Nutzinformation oder die Störinformation beim Anzeigen der Anzeigedaten angezeigt wird, je nachdem, ob die Nutzinformation hervorgehoben oder die Störinformation unterdrückt werden soll. In diesem Zusammenhang kann die Nutzinformation beim Anzeigen der Anzeigedaten derart zeitlich moduliert werden, dass die demodulierte Nutzinformation auf dem Anzeigeelement als konstante, statische Anzeige, z. B. als mehrstellige Zeichenfolge, oder als zeitlich variable Anzeige, z. B. als Laufbanddarstellung oder sich zeitlich wiederholende Zeichenfolge, erkennbar ist.

Die Nutzinformation kann zusätzlich oder alternativ durch Anzeigen der Anzeigedaten auf einem Farbanzeigeelement farblich moduliert werden, z. B. indem die Nutzinformation in einer Farbe angezeigt wird, die sich von der Farbe der Störinformation und/oder des Anzeigenhintergrunds nur bei Beleuchtung mit Lichtsignalen einer vorgegebenen Wellenlänge unterscheidet. Die farbliche Modulation/Demodulation kann z.B. dadurch erreicht werden, dass Farblichtsignale ausgesendet werden, die gemischt mit der Farbe der angezeigten Nutzinformation dazu führen, dass sich die Nutzinformation von ihrem Hintergrund und/ oder von der Störinformation farblich abhebt, oder dass die Störinformation aus den Anzeigedaten ausgeblendet wird und nur die Nutzinformation für den Betrachter erkennbar bleibt.

Die Nutzinformation kann durch das Anzeigen der Anzeigedaten in einer zufälligen, d. h. nicht reproduzierbaren Weise dargestellt werden. Das Aussenden der entsprechenden Lichtsignale durch die Lichtsignaleinheit ist dann jedoch in derselben, von der zufallsgesteuerten Modulation vorgegebenen Weise auszusenden.

Weiter kann die Nutzinformation in die Anzeigedaten derart eingebettet sein, dass ein entsprechendes Aussenden von Lichtsignalen dazu führt, dass die erkennbare Nutzinformation vorgegebene zeitliche Farb- oder Grauwertveränderung aufweist. So kann eine Nutzinformation, die aus einer bestimmten Zeichen- oder Ziffernfolge besteht, auch derart mit Lichtsignalen beleuchtet werden, dass sie in einer charakteristischen Weise fortlaufend invertiert oder in einer sonstigen Weise zeitlich variabel angezeigt wird, so dass für den Betrachter ein optischer Effekt, z.B. ein Blink- oder Kippeffekt, entsteht, der als zusätzlicher Echtheitshinweis der Nutzinformation dienen kann. Ein solcher optischer Effekt erschwert einen Angriff zusätzlich, denn selbst wenn die Nutzinformation ausgespäht werden kann, ist der optische Effekt für den Angreifer nicht reproduzierbar.

Auch kann die Nutzinformation in die Anzeigedaten derart eingebettet werden, dass die auf dem Anzeigeelement erkennbare Nutzinformation vorgegebene Bewegungen aufweist, z.B. Translationen oder Rotationen. Die Nutzinformation ist dann z.B. als eine statisch angezeigte Zeichenfolge erkennbar, die eine zufällige oder vorgegebene Bewegung auf dem Anzeigeelement vollzieht. Eine solche optisch variable Anzeige der Nutzinformation erschwert ein direktes Abtasten des Anzeigeelements mit dem Ziel, die Nutzinformation auf optischem Wege auszuspähen, z.B. durch optische Zeichenerkennung (OCR).

Ebenso ist es möglich, mehrere Nutzinformationen separat voneinander in die Anzeigedaten einzubetten, z. B. zwei für unterschiedliche Zwecke geeignete Zeichenfolgen. Bei Aussenden von Lichtsignalen sind die mehreren separaten Nutzinformationen von dem Betrachter gleichzeitig auf dem Anzeigeelement erkennbar. Bei der Verwendung eines Farbanzeigeelements können die mehreren separaten Nutzinformationen z.B. in jeweils paarweise verschiedenen Farben auf dem Farbanzeigeelement erkennbar sein.

Bei einer besonders bevorzugte Ausführungsform der Erfindung ist der portable Datenträger auch die Nutzinformationsquelle, die die Anzeigedaten der Endgeräteinrichtung zum Anzeigen auf dem Anzeigeelement bereitstellt. Der Datenträger ist dann mit einer Kommunikationseinheit ausgestattet, die die zum Anzeigen durch das Anzeigeelement bestimmten Anzeigedaten über eine Datenkommunikationsschnittstelle überträgt. Die in die Anzeigedaten eingebettete Nutzinformation ist hierbei beispielsweise eine Kennung, ein Passwort oder eine sonstige geheime Zeichenfolge, vorzugsweise ein Einmalpasswort, das der Datenträger als Einmalpasswort-Generator zur Verwendung durch den Betrachter des Anzeigeelements erzeugt.

Ein Manipulieren oder elektronisches Auslesen eines solchen Einmalpassworts ist nicht möglich, da das Einmalpasswort nur infolge eines abgestimmten Sendens der Lichtsignale erkennbar wird und bei einem "Man in the Middle"-Angriff bestenfalls die Anzeigedaten abgefangen werden können, nicht aber die ausgesandten Lichtsignale. Eine Manipulation des Anzeigeelements oder ein Angriff auf die Anzeigedaten kann darüber hinaus dadurch erkannt werden, dass eine Information auf dem Anzeigeelement erscheint, die unabhängig von einem Aussenden der Lichtsignale oder von einem Beleuchten des Anzeigeelements mit den Lichtsignalen erkennbar (oder nicht erkennbar) ist. Insofern kann die Lichtsignaleinheit temporär unterbrochen werden, so dass bei manipulierten Anzeigedaten, d.h. bei einer von dem Angreifer vorgegebenen Information, diese auch ohne das Aussenden von Lichtsignalen erkennbar ist. Der Datenträger kann eine dementsprechende Unterbrechungseinheit umfassen, mit der ein Beobachter des Anzeigeelements die Lichtsignaleinheit temporär unterbrechen kann, um diesen Test durchzuführen.

Der portable Datenträger umfasst vorzugsweise eine Synchronisationseinheit, die die Lichtsignaleinheit und die Kommunikationseinheit derart aufeinander abgestimmt aktiviert, dass das Aussenden der Lichtsignale durch die Lichtsignaleinheit und die Übertragung der Anzeigedaten durch die Kommunikationseinheit miteinander synchronisiert sind. Diese Synchronisation stellt sicher, dass ein Betrachter des Anzeigeelements die Nutzinformation erkennen kann. Hierbei kann die Synchronisationseinheit des Datenträgers die Lichtsignaleinheit gemäß vorgegebener Synchronisationsdaten aktivieren, die eine Synchronisation des Anzeigens der Anzeigedaten und des Aussendens der Lichtsignale betreffen. Anhand der extern oder von dem Datenträger vorgegebenen Synchronisationsdaten sendet die Lichtsignaleinheit Lichtsignale an die Endgeräteinrichtung aus, welche mit dem Anzeigen der Anzeigedaten auf dem Anzeigeelement synchronisiert sind, und zur Erkennbarkeit der Nutzinformation führen.

Die Synchronisationsdaten können beispielsweise im Rahmen eines Aushandelns von Sitzungsparametern zwischen dem Datenträger und der Endgeräteinrichtung im Vorfeld einer Datenkommunikation bestimmt werden. Gemäß solchen in Kooperation bestimmten Synchronisationsdaten zeigt dann eine Anzeigeelementsteuerung der Endgeräteinrichtung die Anzeigedaten auf dem Anzeigeelement an und die Lichtsignaleinheit des Datenträgers wird von einer Synchronisationseinheit zum Aussenden von Lichtsignalen dazu synchron aktiviert.

Ebenso können Synchronisationsdaten durch die Endgeräteinrichtung oder eine dritte Instanz vorgegeben werden. Vorzugsweise werden solche Synchronisationsdaten auf einem optischen Wege an den Datenträger übergeben, z.B. durch Darstellen der Synchronisationsdaten auf dem Anzeigeelement, so dass eine Ausleseeinheit des Datenträgers, bspw. ein Helligkeitssensor, die Synchronisationsdaten von dem Anzeigeelement auslesen und an die Synchronisationseinheit weiterleiten kann. Hierbei können die Synchronisationsdaten wiederum derart auf dem Anzeigeelement dargestellt werden, dass sie erst bei einer abgestimmten Beleuchtung durch die Lichtsignaleinheit ausgelesen werden können. Dadurch wird sichergestellt, dass ein unerlaubtes Ausspähen der Synchronisationsdaten als Teil eines "Man in the Middle"-Angriffs nicht möglich ist.

Alternativ kann auf der Endgeräteinrichtung auch eine Synchronisationsapplikation installiert sein, mit deren Hilfe der Betrachter des Anzeigeelements Synchronisationsdaten individuell vorgeben kann, z.B. indem er eine Balkenanzeige oder dergleichen auf dem Anzeigeelement so einstellt, dass er eine bestimmte Position oder ein bestimmtes Zeitverhalten aufweist. Gemäß den auf diese Weise manuell eingestellten Synchronisationsdaten kann die Synchronisationseinheit des Datenträgers wiederum die Lichtsignaleinheit aktivieren. Insbesondere kann der Datenträger hierbei einen Sensor umfassen, der das Anzeigeelement abtastet und eine entsprechende Abtastinformation an die Synchronisationseinheit weiterleitet, so dass die Synchronisationseinheit die Aktivierung der Lichtsignaleinheit anhand der Abtastdaten derart nachregelt, dass z. B. auf dem Anzeigeelement eine stehende Anzeige der Nutzinformation erkennbar wird.

Prinzipiell kann jeder beliebige Datenträger verwendet werden, der mit einem Prozessor zur Ausführung z.B. einer Synchronisationseinheit und einer Lichtsignaleinheit, z.B. in Form von Leuchtdioden, ausgestattet ist. Vorzugsweise ist ein erfindungsgemäßer Datenträger jedoch eine (U)SIM-Mobilfunkkarte, ein USB-Speicherelement, eine Chipkarte oder Smart Card, eine mit einem Sicherheitselement ausgestattete USB-Lampe oder dergleichen. Als Endgeräteinrichtung kommen insofern bevorzug mobile Telekommunikationsendgeräte, Transaktionsendgeräte, z.B. Geldautomaten, Computer oder Laptops mit Monitoren oder TFT-Bildschirmen oder dergleichen in Frage.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: einen Aufbau eines portablen Datenträgers und einer Endgerät- einrichtung;
- Figur 2: ein Ablaufdiagramm des erfindungsgemäßen Verfahrens;
- Figur 3: eine erste Ausführungsform der Erfindung mit einer Chipkarte und einem LCD-Anzeigeelement;
- Figur 4: eine zweite Ausführungsform der Erfindung mit einem USB- Speicherelement und einem LCD-Anzeigeelement eines Endge- räts;
- Figur 5: eine dritte Ausführungsform der Erfindung mit einer USB- Beleuchtungsquelle und einem TFT-Anzeigeelement;
- Figur 6: ein Beispiel einer angezeigten Nutzinformation; und
- Figur 7: ein Beispiel einer Ziffernfolge mit abwechselnd normal und in- vers angezeigter Nutzinformation.

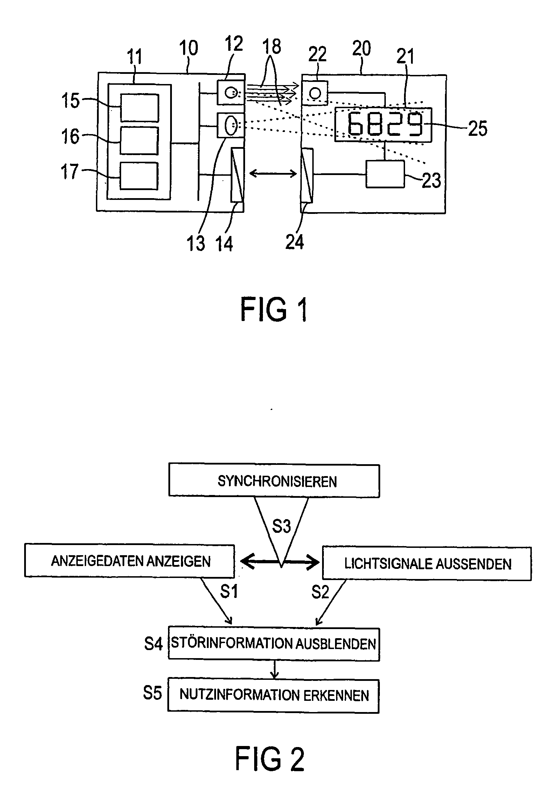

Der in Figur 1 dargestellte portable Datenträger 10 umfasst einen Prozessor 11, auf dem eine Steuerapplikation, eine Synchronisationsapplikation und eine Kommunikationsapplikation als Steuereinheit 15, Synchronisationseinheit 16 und Kommunikationseinheit 17 ausgeführt werden kann. Ferner umfasst der Datenträger 10 eine Lichtsignaleinheit 12, die Lichtsignale 18 and die Endgeräteinrichtung 20 aussendet. Abhängig von der jeweiligen Ausführungsform kann der Datenträger 10 zusätzlich eine Ausleseeinheit 13 zum Auslesen von Daten von einem Anzeigeelement 21 sowie eine Datenkommunikationsschnittstelle 14 zur Datenkommunikation mit einer Endgeräteinrichtung 20 umfassen.

Ein komplementäres Endgerät 20 umfasst ein Anzeigeelement 21, das ein beliebiges Anzeigedisplay sein kann, z.B. LCD-Anzeigedisplay mit einer Segmentanzeige oder einer höheren (Punkt-) Auflösung, ein beliebiger Computerbildschirm, ein TFT-Anzeigedisplay oder dergleichen. Die Anzeige von Anzeigedaten auf dem Anzeigeelement 21 wird durch eine Anzeigeelementsteuerung 23 gesteuert, z.B. ein Treiber des Anzeigeelements 21 oder ein Teil eines Betriebsystems des Endgeräts 20. Das Anzeigeelement 21 kann insbesondere ein Farbanzeigeelement sein, das eine mehrfarbige Farbdarstellung gemäß einem beliebigen Farbraum erlaubt, z.B. gemäß eines RGB-, HSV-, CMYK- oder Lab-Farbraums.

Das Endgerät 20 kann einen Sensor als optische Schnittstelle 22 umfassen, über die von der Lichtsignaleinheit 12 ausgesendete Lichtsignale 18 in das Endgerät eingespeist werden, von wo sie über eine optische Kommunikationsverbindung an die Anzeigesteuerung 23 oder direkt an das Anzeigeelement 21 weitergeleitet werden. Auf dem Anzeigeelement 21 anzuzeigende Anzeigedaten können von einer dritten Stelle, z.B. von einem Hintergrundserver oder einer Website im Internet, von dem Endgerät 20 über eine geeignete Schnittstelle empfangen werden. Für den Fall, dass der Datenträger 10 Anzeigedaten vorgibt, umfasst das Endgerät 20 eine Datenkommunikationsschnittstelle 24 zur Datenkommunikation mit der Datenkommunikationsschnittstelle 14 des Datenträgers 10.

Die auf dem Anzeigeelement 21 anzuzeigenden Anzeigedaten umfassen eine darin eingebettete Nutzinformation 25 (in Fig. 1 die Zahlenfolge "6829"), die nicht erkennbar ist, wenn die Anzeigedaten auf dem Anzeigeelement 21 angezeigt werden, ohne dass gleichzeitig Lichtsignale 18 der Lichtsignaleinheit 12 direkt auf das Anzeigeelement 21 fallen oder in das Endgerät 20 eingespeist und dort von der Anzeigesteuerung 23 zur Anzeige der Anzeigedaten ausgewertet werden. Die Nutzinformation 25 wird also in den Anzeigedaten durch eine Störinformation unkenntlich gemacht bzw. kodiert und kann nur mit Hilfe der Lichtsignale 18 kenntlich gemacht bzw. dekodiert werden.

Dazu ist es notwendig, dass das Aussenden der Lichtsignale 18 durch die Lichtsignaleinheit 12 des Datenträgers 10 und das Anzeigen der Anzeigedaten auf dem Anzeigeelement 21 durch die Anzeigesteuerung des Endgeräts 20 genau aufeinander abgestimmt bzw. miteinander synchronisiert sind. Hierbei kann das Aussenden der Lichtsignale 18 durch die Lichtsignaleinheit 12 ein direktes Beleuchten des Anzeigeelements 21 umfassen, so dass die Störinformation infolge eines erwünschten optischen Effekts ausblendet wird. Ebenso können die Lichtsignale 18 auch über die optische Schnittstelle 22 in das Endgerät 20 eingespeist werden und dort von der Anzeigeelementsteuerung 23 ausgewertet werden. In jedem Falle führt das Synchronisationserfordernis zu einer wirksamen Absicherung der Nutzinformation 25, da diese einerseits nicht manipuliert oder ausgespäht werden können und andererseits die Authentizität der Informationsquelle, z.B. des Hintergrundservers oder des Datenträgers selbst, gewährleistet ist.

Dementsprechend umfasst das in Fig. 2 illustrierte Verfahren zum Anzeigen der Nutzinformation 25 auf dem Anzeigeelement 21 zumindest fünf essentielle Schritte: In Schritt S1 wird eine Synchronisation zwischen dem Aussenden der Lichtsignale 18 und dem Anzeigen der Anzeigedaten hergestellt, indem z.B. Synchronisationsdaten erzeugt und berücksichtigt werden. In den parallel ausgeführten Schritten S2 und S3 werden die Anzeigedaten auf dem Anzeigeelement 21 gemäß den Synchronisationsdaten angezeigt (Schritt S2) und gleichzeitig Lichtsignale 18 durch die Lichtsignaleinheit 12 an das Anzeigeelement 21 gemäß den Synchronisationsdaten ausgesendet (Schritt S3).

Beim Anzeigen der Anzeigedaten (Schritt S2) wird die Nutzinformation 25 derart moduliert, dass sie ohne Aussenden der Lichtsignale 18 für einen Betrachter des Anzeigeelements 21 nicht erkennbar ist, da sie entweder nicht von der Störinformation zu unterscheiden ist oder gar nicht als separate Information wahrgenommen wird. Hierfür kann die Nutzinformation beispielsweise auf einem LCD-Anzeigeelement zeitmoduliert oder auf einem Farbanzeigeelement farbmoduliert werden. Dementsprechend wird durch das Aussenden der Lichtsignale 18 (Schritt S3) die in die Anzeigedaten eingebettete Nutzinformation 25 demoduliert, beispielsweise durch sequenzielle Lichtimpulse, um die Störinformation so auszublenden, dass die Nutzinformation 25 erkennbar wird, oder durch Farblichtsignale, die eine ansonsten von der Störinformation und/oder dem Hintergrund nicht unterscheidbare Nutzinformation 25 in einer Farbe erscheinen lässt, die sie von der Störinformation und/oder von dem Hintergrund abhebt. Da diese beiden Schritte derart aufeinander abgestimmt sind, dass eine Störinformation der Anzeigedaten beim Anzeigen der Anzeigedaten ausgeblendet wird (Schritt S4), wird die in den Anzeigedaten eingebettete Nutzinformation 25 für einen Betrachter des Anzeigeelements 21 erkennbar (Schritt S5).

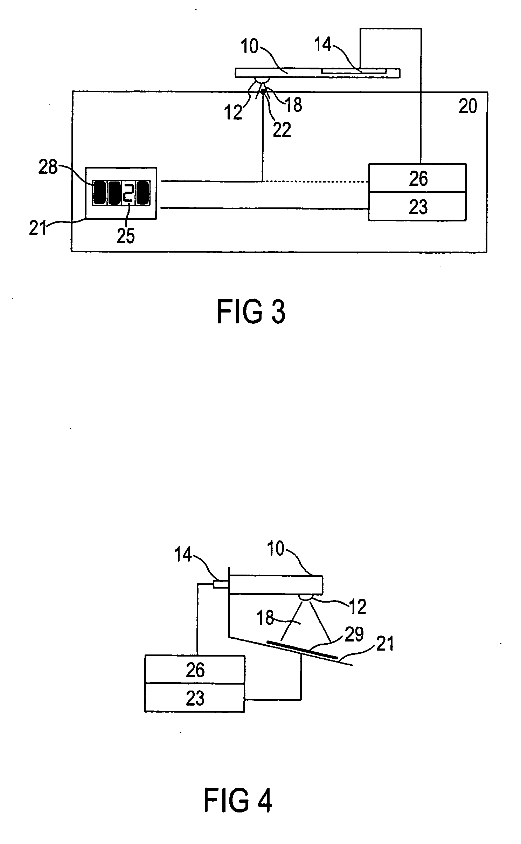

Insbesondere für die Schritte S1 bis S3 sind mehrere verschiedene Ausführungsvarianten vorstellbar, die nachfolgend im Zusammenhang mit den in den Figuren 3 bis 5 gezeigten Ausführungsformen beschrieben werden:

Figur 3 zeigt eine Chipkarte 10 mit einer Schnittstelle 14 gemäß ISO 7816 und einer von einem Chipkarten-Controller ansteuerbare Leuchtdiode als Lichtsignaleinheit 12. Die Chipkarte 10 ist über die Schnittstelle 14 mit einem Controller eines Mobilfunkgeräts 20 verbunden, der ein Betriebssystem 26 umfasst. Ein Anzeigetreiber 23, der auch Teil des Betriebssystems 26 sein kann, steuert das LCD-Anzeigeelement 21 des Mobilfunkgeräts 20. In der Aufnahmehalterung des Mobilfunkgeräts 20 ist ein Lichtsensor oder eine sonstige optische Schnittstelle 22 mit einem Lichtleiter integriert, der Lichtsignale 18 der Leuchtdiode 12 aufnehmen kann, wenn die Chipkarte 10 in der Aufnahmehalterung sitzt.

Die Chipkarte 10 ist z.B. als Einmalpasswort-Generator ausgestaltet und Anzeigedaten, in die als Nutzinformation 25 ein Einmalpasswort eingebettet ist, werden über die ISO-Schnittstelle 14 an das Betriebssystem 26 und den Treiber 23 des Mobilfunkgeräts 20 übertragen und schließlich auf dem Anzeigeelement 21 angezeigt. Gleichzeitig werden mit dem Anzeigen der Anzeigedaten synchronisierte Lichtsignale 18 über die optische Schnittstelle 22 in das Mobilfunkgerät 20 eingespeist.

Sinngemäß aktivieren bzw. deaktivieren die Lichtsignale 18 einen Anzeigehintergrund 28 des Anzeigeelements 21, um die Nutzinformation 25 für den Betrachter erkennbar zu machen. In Figur 3 ist ein LCD-Anzeigenelement als Anzeigeelement 21 gezeigt, welches vor einem Kontrast bildenden, beispielsweise weißen Anzeigehintergrund 28 Informationen durch eine schwarze Darstellung - beispielsweise der in der Figur gezeigten Ziffer "2" - erreicht.

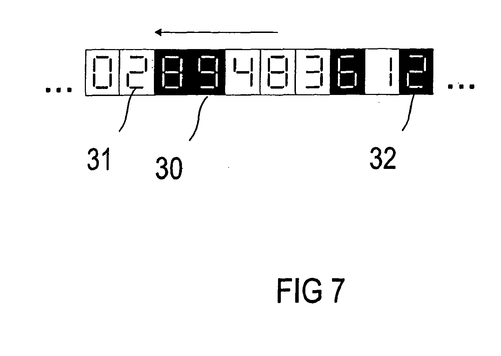

Der Anzeigehintergrund 28 kann in seinem Grundzustand deaktiviert sein, also schwarz wirken. Schwarz dargestellte Informationen sind somit nicht erkennbar. Solange die Chipkarte 10 keine Lichtsignale sendet, ist der Anzeigenhintergrund 28 deaktiviert. Störinformationen in den angezeigten Informationen können somit gezielt ausgeblendet werden. Sobald (und solange) eine Nutzinformation 25 angezeigt wird, sendet die Chipkarte 10 ein Lichtsignal 18. Der Anzeigehintergrund 28 wird somit aktiviert und die angezeigte Nutzinformation 25 wird für den Betrachter erkennbar. Auch wenn das LCD-Anzeigelement 21 die Information invertiert darstellt, also beispielsweise als weiße Ziffer in einem schwarzen Feld, können die Lichtsignale 18 unverändert zur Aktivierung/Deaktivierung verwendet werden, um die gleiche Wirkung zu erzielen. Vorteile einer möglichen, wechselnd normalen und invertierten Darstellung der Nutzinformation werden später näher in Bezug auf Fig. 7 beschrieben.

Vorzugsweise wird nur der Anzeigenhintergrund 28 eines Teils des Anzeigelements 21 durch die Lichtsignale 18 beeinflusst. Der Teil kann mehrere Segmente umfassen, die zur Anzeige beispielsweise jeweils einer Ziffer vorgesehen sind. Außerhalb dieses Teils des Anzeigeelements 21 liegende (nicht dargestellte) Bereiche des Anzeigeelements 21 können somit unverändert für normale Zwecke verwendet werden.

In Fig. 3 ist eine Variante gezeigt, in welcher der Anzeigenhintergrund aktiviert ist, wenn zugleich ein Steuersignal des Anzeigetreibers 23 (strichliniert dargestellt) und keine Lichtsignale 18 vorliegen. Durch die gezielte Aktivierung der Leuchtdiode 12 bzw. das gezielte Aussenden von Lichtsignalen 18 durch die Leuchtdiode 12 können die von der optischen Schnittstelle 22 aufgenommenen Lichtsignale 18 durch eine entsprechende Steuerung (strichliniert dargestellt) durch das Betriebssystem 26 und die Anzeigesteuerung 23 oder eine unmittelbare Ansteuerung des Anzeigeelements 21 dazu führen, dass ein Anzeigenhintergrund 28 des LCD-Anzeigeelements 21 aktiviert/ deaktiviert wird. Die Aktivierung/ Deaktivierung kann auch so erfolgen, dass ein definiertes Ein-/Ausschalten des betreffenden Segmentbereichs des Anzeigelements 21 möglich ist. Beispielsweise kann ein Lichtsignal 18 dazu führen dass ein Anzeigehintergrund 28 schwarz dargestellt wird, so dass eine in schwarz angezeigte Störinformation ausgeblendet wird. Bei einer Nutzinformation 25 wird dementsprechend kein Lichtsignal 18 eingespeist, so dass diese für einen Betrachter des Anzeigeelements 21 erkennbar ist. Entsprechend ist bei dem in Fig. 3 gezeigten LCD-Anzeigeelement 21 bei drei Anzeigenstellen der Hintergrund aktiviert, um eine entsprechende Störinformation auszublenden, und nur bei einer Anzeigenstelle ist eine Nutzinformation 25 erkennbar. Zur entsprechenden logischen Verknüpfung der Lichtsignale mit dem Steuersignal wird ein nicht dargestelltes Verknüpfungselement verwendet, welches für jeden Segmentbereich einzeln ein Aktivierungssignal bereitstellen kann.

Prinzipiell können die Anzeigedaten eine beliebige Nutzinformation 25 umfassen, z. B. in Form von Zahlen- oder Zeichenketten. Vorzugsweise wird jedoch ein Einmalpasswort 25 in die Anzeigedaten gemäß einer zeitlichen Modulation eingebettet, so dass das Einmalpasswort 25, oder einzelne Zeichen desselben, in vorgegebenen zeitlichen Intervallen auf dem Anzeigeelement 21 angezeigt wird. Innerhalb dieser Zeitintervalle wird eine Störinformation angezeigt, so dass ein Betrachter des Anzeigeelements 18 das Einmalpasswort 25 nicht erkennen kann, ohne dass die Störinformation durch auf diese Zeitintervalle abgestimmte Lichtsignale 18 ausgeblendet wird, da je nach Anzeigefrequenz der Anzeigedaten andernfalls entweder eine nicht reproduzierbare Aktivität des Anzeigeelements 21 ("Zahlensalat") oder eine einheitlich graue bzw. schwarze Fläche angezeigt wird.

Durch die Synchronisation der Anzeige der Anzeigedaten mit dem Aussenden der Lichtsignale 18 wird die Nutzinformation 25 gegen Manipulation und Ausspähen abgesichert, da ein Angreifer bestenfalls die Anzeigedaten, nicht aber gleichzeitig auch die Aktivität der Lichtsignaleinheit 12 erkennen und manipulieren kann. Sofern ein Angreifer dennoch eine Falschinformation auf dem Anzeigeelement 21 einspielt, ist dies durch eine temporäre Unterbrechung der Lichtsignaleinheit 12 leicht zu erkennen, da die Falschinformation entweder auch ohne Aussenden von Lichtsignalen 18 erkennbar wäre oder erst gar nicht so gestaltet werden könnte, dass sie nur bei Aussenden von Lichtsignalen 18 erkennbar ist.

Der Anzeigetreiber 23 ist so ausgestaltet, dass er die Anzeigedaten vorzugsweise mit einem Bruchteil des CLK-Signals ("Clock- bzw. Takt-Signal auf dem Kontakt C3 der ISO-Schnittstelle) ausgeben kann. Auf diese Weise kann eine Synchronisation zwischen der Aktivität der Leuchtdiode 12 und dem Anzeigen der Anzeigedaten auf dem LCD-Anzeigeelement 21 sichergestellt werden. Ein Angriff auf die Integrität der Nutzinformation 25 z.B. mittels eines "Man in the Middle"-Angriffs kann zusätzlich dadurch erschwert werden, dass die Nutzinformation 25, die in der Regel eine Zahlen- oder Zeichenfolge ist, mit einer bestimmten Frequenz oder einem bestimmten Zeitverhalten invertiert wird, so dass für den Betrachter ein Blink- oder Kippeffekt entsteht. Sofern dieser Blink- oder Kippeffekt allein von dem Lichtsignalen 18 hervorgerufen wird und nicht Teil einer Steuerinformation der Anzeigedaten ist, kann er als zusätzliches Sicherheitsmerkmal eingesetzt werden, das ein Angreifer allein durch Ausspähen der Anzeigedaten nicht erkennen kann.

Figur 4 zeigt ein USB-Speicherelement 10 mit einer Leuchtdiode 12, die über eine USB-Schnittstelle 14 mit einem Transaktionsgerät 20, z.B. einem Geldautomat, verbunden werden kann. Die Anzeigedaten werden von dem USB-Speicherelement 10 über die USB-Schnittstelle 14 an das Betriebssystem 26 des Transaktionsgeräts 20 übertragen und an den Anzeigetreiber 23 weiterleitet. In die Anzeigedaten kann z.B. wieder ein Einmalpasswort als individuelle Identifikationsnummer des Benutzers gegenüber dem Terminal 20 eingebettet sein. Ebenso ist es möglich, dass die Anzeigedaten nicht von dem USB-Element 10 sondern von dem Terminal 20 oder einer dritten Stelle bereitgestellt werden, die mit dem Terminal verbunden ist. Dies ist beispielsweise bei einem Transaktionsbetrag oder einem Kontostand der Fall, der dem Benutzer des USB-Elements 10 in Rahmen einer Transaktion angezeigt werden soll.

Unabhängig von der tatsächlichen Nutzinformationsquelle wird auch hier durch eine Synchronisation zwischen den von der Leuchtdiode 12 direkt auf das Anzeigeelement 21 des Terminals 20 geworfenen Lichtsignalen 18 und dem Anzeigen der Anzeigedaten auf einem Anzeigeelement 21 gewährleistet, dass für einen Betrachter des Anzeigeelements 21 die Nutzinformation 25 erkennbar ist, wenn er das USB-Speicherelement 10 entsprechend einsetzt. Die Anzeigedaten werden über die USB-Schnittstelle 14 an das Betriebssystem 26 des Terminals 20 übertragen und an den Anzeigetreiber 23 zum Anzeigen auf dem Anzeigeelement 21 übergeben.

Um die notwendige Synchronisation zu gewährleisten können an einer vorgegebenen Position des Anzeigeelements 21 Synchronisationsdaten angezeigt werden, die von einer Leseeinheit 13, z.B. einem Helligkeitssensor, ausgelesen und an eine Synchronisationseinheit 16 des USB-Speicherelements 10 weitergeleitet werden. Alternativ können die Synchronisationsdaten auch im Rahmen eines Aushandelns von Sitzungsparametern zwischen der Steuereinheit 15 des USB-Speicherelements 10 mit dem Terminal 20 übereinstimmend festgelegt werden. Auch können die Synchronisationsdaten über die USB-Schnittstelle 14 von dem Terminal 20 an das USB-Speicherelement 10 übertragen werden. In jedem Falle aktiviert die Synchronisationseinheit 16 dann die Leuchtdiode 12 in einer mit dem Anzeigen der Anzeigedaten synchronisierten Weise, Lichtsignale 18 auf das Anzeigeelement auszusenden. Dazu wird bei Beginn des Anzeigens der Anzeigedaten auch über das Anzeigeelement 21 ein Startsignal an das USB-Speicherelement 10 gesendet, woraufhin zeitgleich das Aussenden der Lichtsignale 18 beginnt.

Vorzugsweise umfasst das USB-Speicherelement 10 als Lichtsignaleinheit 12 eine Infrarot-Beleuchtungsquelle oder mehrere Leuchtdioden verschiedener Wellenlänge, um farbige Lichtsignale 18 zu erzeugen. Im Falle einer Infrarot-Lichtsignaleinheit 12 kann eine Infrarot-Beleuchtung 18 erzeugt werden, die das Anzeigeelement 21 und eine darauf angebrachte aktive Folie 29 direkt beleuchtet. Bei Auftreffen von Infrarot-Lichtsignalen 18 auf der Folie 29 wird diese an den entsprechenden Stellen angeregt und tritt dort in einen optisch sperrenden/ durchlässigen Zustand über. Auf diese Weise kann die Folie 29 durch die Infrarot-Beleuchtung 18 ihre optischen Eigenschaften derart verändern, dass bei einer zunächst optisch durchlässigen Folie Bereiche gesperrte werden, die eine Störinformation anzeigen, oder bei einer zunächst optisch sperrenden Folie Bereiche optisch durchlässig gemacht werden, die eine Nutzinformation 25 anzeigen.

Im Falle einer Farblichtsignaleinheit 12, die farbige Lichtsignale 18 auf ein Farbanzeigeelement 21 des Terminals 20 projiziert, kann durch additive oder subtraktive Farbmischeffekte zwischen der Farbe der Farblichtsignale 18 und der Anzeigedaten, insbesondere der Nutzinformation 25, ein gezieltes Ausblenden der Störinformation und Erkennbarmachen der Nutzinformation 25 hervorgerufen werden. So können Farbmischeffekte zwischen den Farblichtsignalen 18 und der Farbanzeige dazu führen, dass eine ansonsten hinsichtlich ihrer Farbe nicht von der Störinformation bzw. von dem Anzeigenhintergrund unterscheidbare Nutzinformation 25 durch Beleuchtung mit geeigneten Farblichtsignalen 18 erkennbar wird. Ebenso kann eine Beleuchtung mit Farblichtsignalen 18 dazu führen, dass eine Störinformation, die ansonsten nicht von der angezeigten Nutzinformation zu unterscheiden ist, durch eine Farbmischung ausgeblendet wird. Diese farbliche Modulation/ Demodulation der Nutzinformation 25 kann auch mit der im Zusammenhang mit Figur 3 erläuterten zeitlichen Modulation/ Demodulation kombiniert werden.

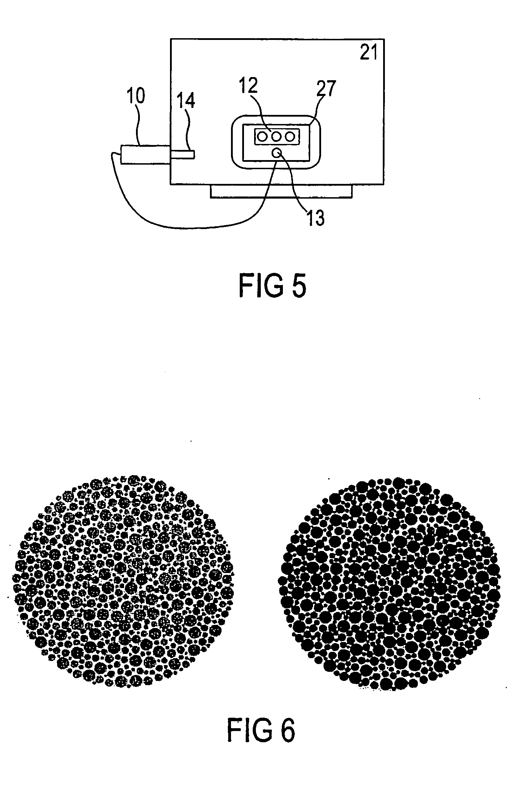

Auf diese Weise kann sichergestellt werden, dass die angezeigten Anzeigedaten von dem USB-Speicherelement 10 stammen und somit vertrauenswürdig sind und nicht etwa über einen Angriff auf das Anzeigeelement 21 eingespielt wurden. Bei der Verwendung eines Farbanzeigeelements 21 und von Farblichsignalen 18 können neben Zahlen- und Zeichenketten natürlich auch Logos und andere Darstellungen in speziellen Farbkombinationen angezeigt werden, die nur dann von einem Betrachter korrekt erkannt werden können, wenn die dazu passende farbliche Beleuchtung synchronisiert durch die Leuchtsignaleinheit 12 bzw. die Synchronisationseinheit 16 erfolgt. Ein Angriff mittels einer falschen farblichen Darstellung von Anzeigedaten ist hierbei nicht möglich, da einem Angreifer keine Rückschlüsse möglich sind, wann und mit welcher Wellenlänge die USB-Speichereinheit 10 ein Ausblenden von Störinformation aus den farbig angezeigten Anzeigedaten vornimmt. Figur 6 zeigt ein Beispiel einer Nutzinformation 25 (der Zahl "12"), die im Rahmen des Anzeigens der Anzeigedaten nicht erkennbar ist (links) und erst bei Beleuchtung mit geeigneten Lichtsignalen 18 von deren Hintergrund unterscheidbar und dadurch erkennbar wird.

Neben den oben erläuterten Möglichkeiten die relevante Nutzinformation 25 in den Anzeigedaten durch eine (schnelle) sequentielle Folge von Stör- und Nutzinformation 25 und/ oder durch Farbmischeffekte zu verstecken, besteht zusätzlich die Möglichkeit, die Nutzinformation 25, z.B. Zeichen, Logos oder dergleichen, als zeitlich oder örtlich variierende (Farb-) Nutzinformation 25 auszugestalten, die bei Beleuchtung durch entsprechende (Farb-) Lichtsignale 18 nicht nur auf dem Anzeigeelement 21 erkennbar ist, sondern sich auch gemäß eines vorgegebenen Bewegungsmusters in Farbe und Position variierend bewegt. Insbesondere ist es möglich, Kipp- oder Blinkeffekte hervorzurufen - z.B. ein Wechsel zwischen einer Normal- und einer Inversanzeige mit vorgegebener Frequenz - die vorzugsweise allein auf den Einsatz von Farblichtsignalen 18 zurückzuführen sind, und die durch einen Angriff nicht ausgespäht werden können. Ergänzend oder alternativ können gleichzeitig mehrere Nutzinformationen 25 angezeigt werden, beispielsweise als einander überlagernde, in verschiedenen Farben dargestellte separate Nutzinformation 25. Zum Beispiel kann ein Einmalpasswort positiv in rot angezeigt werden und eine weitere Kennung kann gleichzeitig negativ in grün angezeigt werden.

Figur 5 zeigt einen als USB-Lampe ausgestalteten Datenträger 10 mit einem integrierten Sicherheitselement, auf dem eine Steuereinheit 15, eine Synchronisationseinheit 16 und eine Kommunikationseinheit 17 eingerichtet ist. Die USB-Lampe 10 kann an einem Computer oder Laptop oder dergleichen über die USB-Schnittstelle 14 angeschlossen werden und ein Lampenelement 27 des USB-Lampe 20, das flexibel an dem USB-Speicherelement 10 angebracht ist, kann auf eine bestimmte Stelle des TFT-Anzeigeelements 21 des Computers 20 gesetzt werden kann, um diese auszulesen und zu beleuchten. Hierfür umfasst das Lampenelement 27 eine Lichtsignaleinheit 12, die mehrere farbige Leuchtdioden umfassen kann, und eine Ausleseeinheit 13, z.B. einen Helligkeitssensor oder dergleichen.

Die Vertrauenswürdigkeit einer auf dem TFT-Anzeigeelement 21 des Computers 20 angezeigten Website oder Internet-Software, z.B. einer Bank oder einer vergleichbaren Institution, kann sichergestellt werden, indem auf der Website eine Anzeigeinformation angezeigt wird, die eine Nutzinformation, z.B. ein Einmalpasswort als Zugang zu den Kontodaten eines Benutzers, umfasst, welche für einen Betrachter nur bei synchronisierter Beleuchtung mit der USB-Lampe 10 erkennbar ist, die möglicherweise genau für diesen Zweck von der betreffenden Institution bereitgestellt wird. Ein Benutzer der USB-Lampe 10, der eine korrekte Nutzinformation 25 erkennen kann, kann sicher sein, dass er eine vertrauenswürdige Website oder Banking-Software angewählt hat und nicht eine gefälschte (Phishing-) Website.

Die Synchronisation des Aussendens der Lichtsignale 18 und des Anzeigens der Anzeigedaten wird über Synchronisationsdaten sichergestellt, die auf der Website angezeigt werden und die die Synchronisationseinheit 16 der USB-Lampe 10 mittels der Ausleseeinheit 13 von der Website ablesen kann. Als zusätzliche Sicherheit können diese Synchronisationsdaten derart auf dem TFT-Bildschirm 21 dargestellt werden, dass sie vor einem Auslesen mittels einer vorgegebenen, z.B. farbigen Beleuchtung durch die Lichtsignaleinheit 21 sichtbar gemacht werden müssen.

Eine weitere Möglichkeit, die Synchronisationsdaten festzulegen ist eine manuelle Bestimmung durch den Benutzer über eine auf den Computer 20 ausführbare Synchronisationsapplikation. Der Benutzer kann mit der Synchronisationsapplikation eine Anzeige z.B. derart einstellen, dass ein laufender Balken in einem bestimmten Anzeigenbereich zu stehen kommt oder dass eine als Nutzinformation 25 in Frage kommende Anzeige erkennbar wird. Jede Änderung der Einstellung des Benutzers über die Synchronisationsapplikation kann dann über die Ausleseeinheit 13 registriert und als Abtastdaten an die Synchronisationseinheit 16 der USB-Lampe 10 weitergegeben werden, welche die Synchronisationsdaten und infolgedessen das Aussenden der Lichtsignale 18 durch die Lichtsignaleinheit 12 entsprechend den Abtastdaten verändert. Durch diese Rückkopplung werden die Synchronisationsdaten von dem Benutzer iterativ so eingestellt, dass er schließlich die Nutzinformation 25 erkennen kann, sofern unmanipulierte, vertrauenswürdige Anzeigedaten vorliegen.

Fig. 7 zeigt eine Ziffernfolge 30 mit mehreren Ziffern, die normal (schwarz auf weiß) oder invertiert (weiß auf schwarz) dargestellt sind. Die Ziffernfolge kann in der Richtung des Pfeils auf einem einzelnen Segment eines Anzeigeelementes nacheinander angezeigt werden oder auf mehreren Segmenten eines Anzeigeelementes - zumindest teilweise gleichzeitig - in Richtung des Pfeils (von rechts nach links) durchlaufend angezeigt werden. Zunächst können die Ziffern der Ziffernfolge 30, zufällig oder nach einem vorbestimmten Muster verteilt, wechselnd normal und invertiert dargestellt sein, um beispielsweise für den Betrachter in der Ziffernfolge einen gleichmäßigen Grauton zu erzeugen. Die angezeigte Nutzinformation, hier in der Form der Ziffern 31 und 32 für die Zahl "2", kann - vorzugsweise nach einem vorbestimmten Muster - wechselnd normal und invertiert dargestellt werden. Durch eine der zuvor beschriebenen Varianten wird die Nutzinformation mit Hilfe des Lichts (der Lichtsignale) des tragbaren Datenträgers für den Betrachter wahrnehmbar gemacht. Der Betrachter sieht dann die Nutzinformation als in seiner Darstellung kippende Information (Kippeffekt). Der Kippeffekt kann als weitere Absicherung verwendet werden, denn er ist für einen Angreifer schwerer nachbildbar.

Insbesondere kann das vorbestimmte Muster für die Darstellung der Nutzinformation durch den Betrachter vorab ausgewählt worden sein, so dass der Betrachter die angezeigte Nutzinformation nur akzeptiert, wenn sie auch tatsächlich gemäß seinem Muster angezeigt wird. Einstellbare Kriterien des vorbestimmten Muster sind beispielsweise mit / ohne Kippeffekt ggf. hierzu Wechselrhythmus (wie beispielsweise dreimal normal + einmal invers + dreimal normal ... ), normale / inverse Darstellung als Grundform der Darstellung und/ oder durch das Anzeigeelement laufende / statische Darstellung ggf. hierzu Laufrichtung. Das vorbestimmte Muster bzw. die entsprechenden Benutzereinstellungen zu den Kriterien, für eine entsprechende Steuerung der Erzeugung der Lichtsignale, auf dem tragbaren Datenträger gespeichert.

## Patentansprüche

1. Verfahren zum Anzeigen einer Nutzinformation (25) auf einem Anzeigeelement (21) einer Endgeräteinrichtung (20), **gekennzeichnet durch** die Schritte:
- Anzeigen (S1) von die Nutzinformation (25) umfassenden Anzeigedaten auf dem Anzeigeelement (21); und
- Aussenden (S2) von Lichtsignalen (18) **durch** eine Lichtsignaleinheit (12) eines portablen Datenträgers (10) an die Endgeräteeinrichtung (20);
wobei die Nutzinformation (25) ohne das Aussenden (S2) der Lichtsignale (18) für einen Betrachter des Anzeigeelements (21) nicht erkennbar ist, wobei die Anzeigedaten derart angezeigt werden (S1) und die Lichtsignale (18) derart ausgesendet werden (S2), dass ein Betrachter des Anzeigeelements (21) die Nutzinformation (25) erkennen kann (S5), und
wobei die Lichtsignale (18) in eine optische Schnittstelle der Endgeräteeinrichtung (20) eingespeist werden, um dort eine Ansteuerung des Anzeigeelements (21) zu beeinflussen, oder das Anzeigeelement (21) mit den Lichtsignalen (18) direkt beleuchtet wird.

2. Verfahren nach Anspruch 1, **dadurch gekennzeichnet, dass** auf dem Anzeigeelement (21) Anzeigedaten angezeigt werden (S1), die neben der Nutzinformation (25) eine Störinformation umfassen, wobei das Anzeigen (S1) der Anzeigedaten und das Aussenden (S2) der Lichtsignale (18) derart aufeinander abgestimmt sind (S3), dass die Lichtsignale (18) ein Ausblenden der Störinformation aus den angezeigten Anzeigedaten bewirken (S4).

3. Verfahren nach Anspruch 2, **dadurch gekennzeichnet, dass** das Anzeigeelement ein LCD-Anzeigeelement (21) ist und die Störinformation **dadurch** ausgeblendet wird (S4), dass die Lichtsignale (18) bewirken, dass ein Anzeigehintergrund (28) des LCD-Anzeigelements (21) derart dargestellt wird, dass die Störinformation vor dem Anzeigenhintergrund (28) des LCD-Anzeigenelements (21) für einen Betrachter nicht erkennbar ist, wobei die Lichtsignale (18) in eine optische Schnittstelle der Endgeräteeinrichtung eingespeist werden, um dort eine Ansteuerung des Anzeigeelements (21) zu beeinflussen.

4. Verfahren nach Anspruch 3, **dadurch gekennzeichnet, dass** die Lichtsignale (18) bewirken, dass der Anzeigehintergrund (28) des LCD-Anzeigeelements (21) in der gleichen Farbe oder in dem gleichen Grauwert dargestellt wird, wie die auszublendende Störinformation (S4).

5. Verfahren nach Anspruch 2, wobei das Anzeigeelement (21) mit den Lichtsignalen (18) direkt beleuchtet wird, **dadurch gekennzeichnet, dass** das Anzeigeelement ein Farbanzeigeelement (21) ist, die Lichtsignale (18) Farblichtsignale sind, und die Störinformation ausgeblendet wird (S4), indem das Farbanzeigeelement (21) mit den Farblichtsignalen (18) beleuchtet wird (S2), die derart auf eine Farbe, in der die Störinformation auf dem Farbanzeigeelement (21) angezeigt wird, abgestimmt sind (S3), dass die Störinformation für den Betrachter nicht erkennbar ist (S4).

6. Verfahren nach Anspruch 2, wobei das Anzeigeelement (21) mit den Lichtsignalen (18) direkt beleuchtet wird, **dadurch gekennzeichnet, dass** die Lichtsignale (18) Infrarot-Lichtsignale (18) sind, und dass die Störindie Störinformation ausgeblendet wird (S4), indem eine das Anzeigeelement (21) bedeckende Folie (29) derart mit den Infrarot-Lichtsignalen (18) direkt beleuchtet wird, dass die Folie (20) für die Störinformation optisch undurchlässig ist (S4).

7. Verfahren nach einem der Ansprüche 1 bis 6, **dadurch** gekennzeich-net, dass die Nutzinformation (25) durch das Anzeigen (S1) der Anzeigedaten moduliert wird und die Lichtsignale (18) derart an das Anzeigeelement (21) ausgesendet werden, dass die Nutzinformation (25) demoduliert und **dadurch** für den Betrachter erkennbar wird (S5).

8. Verfahren nach Anspruch 7, **dadurch gekennzeichnet, dass** die Nutzinformation (25) durch sequentielles Anzeigen (S1) der Anzeigedaten zeitlich moduliert wird und die Lichtsignale (18) in Form von sequentiellen Lichtimpulsen an das Anzeigeelement (21) ausgesendet werden, wobei die Anzeigedaten mit einer derart hohen Frequenz sequentiell angezeigt werden (S1), dass die Nutzinformation. (25) in den angezeigten Anzeigedaten ohne Senden (S2) der sequentiellen Lichtimpulse nicht erkennbar ist.

9. Verfahren nach Anspruch 8, **dadurch gekennzeichnet, dass** die Nutzinformation (25) beim Anzeigen (S1) der Anzeigedaten derart zeitlich moduliert wird, dass die durch die Lichtimpulse (18) demodulierte Nutzinformation (25) auf dem Anzeigeelement (21) statisch oder zeitlich variierend erkennbar ist (S5).

10. Verfahren nach Anspruch 8 oder 9, wobei das Anzeigeelement (21) mit den Lichtsignalen (18) direkt beleuchtet wird, **dadurch gekennzeichnet, dass** die Nutzinformation (25) durch farbiges Anzeigen (S1) der Anzeigedaten farblich moduliert wird und dass die Lichtsignale in Form von Farblichtsignalen (18) an das Anzeigeelement (21) ausgesendet werden (S2), wobei die Anzeigedaten derart farbig angezeigt werden (S1), dass die Nutzinformation (25) ohne Aussenden (S2) der Farblichtsignale (18) in den farbigen Anzeigedaten nicht erkennbar ist.

11. Verfahren nach einem der Ansprüche 1 bis 10, **dadurch gekennzeichnet, dass** die Anzeigedaten die Nutzinformation (25) derart umfassen, dass die von dem Betrachter erkennbare Nutzinformation (25) ein vorgegebenes zeitliches Bewegungsmuster aufweist (S5).

12. Verfahren nach einem der Ansprüche 1 bis 11, **dadurch gekennzeichnet, dass** die Anzeigedaten mehrere separate Nutzinformationen (25) derart umfassen, dass die mehreren Nutzinformationen (25) von dem Betrachter gleichzeitig separat erkennbar sind.

13. Portabler Datenträger (10), umfassend eine Schnittstelle zur Verbindung mit einer Endgeräteinrichtung (20), **gekennzeichnet durch** eine Lichtsignaleinheit (12), die eingerichtet ist, für ein Anzeigeelement (21) einer mit dem Datenträger (10) verbundenen Endgeräteinrichtung (20) bestimmte Lichtsignale (18) an die Endgeräteeinrichtung (20) derart auszusenden, dass ein Betrachter des Anzeigeelements (21) eine in den Anzeigedaten des Anzeigelements (21) umfasste Nutzinformation (25), die ohne die Lichtsignale (18) nicht erkennbar ist, erkennen kann, wobei der Datenträger (10) eingerichtet ist, die Lichtsignale (18) in eine optische Schnittstelle der Endgeräteeinrichtung (20) einzuspeisen, um dort eine Ansteuerung des Anzeigeelements (21) zu beeinflussen, oder das Anzeigeelement (21) mit den Lichtsignalen (18) direkt zu beleuchten.

14. Portabler Datenträger (10) nach Anspruch 13, **gekennzeichnet durch** eine Datenkommunikationsschnittstelle (14) zum Übertragen von Anzeigedaten an eine mit dem Datenträger (10) verbundene Endgeräteinrichtung (20) und eine Kommunikationseinheit (17), die eingerichtet ist, Anzeigedaten über die Datenkommunikationsschnittstelle (14) an die Endgeräteinrichtung (20) zu übertragen, die zum Anzeigen **durch** das Anzeigeelement (21) der Endgeräteinrichtung (20) bestimmt sind und als Nutzinformation (25) ein Einmalpasswort umfassen.

15. Endgeräteinrichtung (20), umfassend eine Schnittstelle (24) zur Verbindung mit einem portablen Datenträger (10) gemäß einem der Ansprüche 13 oder 14 und ein Anzeigeelement (21) zum Anzeigen von eine Nutzinformation (25) umfassenden Anzeigedaten, **dadurch gekennzeichnet, dass** die Endgeräteinrichtung (20) eingerichtet ist, mit dem portablen Datenträger gemäß einem Verfahren nach einem der Ansprüche 1 bis 12 zusammenzuwirken.

## Claims

1. A method for displaying useful information (25) on a display element (21) of a terminal device (20), **characterized by** the steps of:
- displaying (S1) on the display element (21) of display data comprising the useful information (25); and
- emission (S2) of light signals (18) by a light signal unit (12) of a portable data carrier (10) to the terminal device (20);
wherein the useful information (25) is not recognizable to a viewer of the display element (21) without the emission (S2) of the light signals (18), wherein the display data are so displayed (S1) and the light signals (18) are so emitted (S2) that a viewer of the display element (21) can recognize (S5) the useful information (25), and the light signals (18) are injected into an optical interface of the terminal device (20) to influence a driving of the display element (21) there, or the display element (21) is illuminated directly with the light signals (18).

2. The method according to claim 1, **characterized in that** on the display element (21) there are displayed (S1) display data which comprise spurious information besides the useful information (25), wherein the displaying (S1) of the display data and the emission (S2) of the light signals (18) are in coordination with each other (S3) such that the light signals (18) cause a masking out of the spurious information from the displayed display data (S4).

3. The method according to claim 2, **characterized in that** the display element is an LCD display element (21), and the spurious information is masked out (S4) by the light signals (18) causing a display background (28) of the LCD display element (21) to be represented such that the spurious information is not recognizable to a viewer against the display background (28) of the LCD display element (21), whereby the light signals (18) are injected into an optical interface of the terminal device to influence a driving of the display element (21) there.

4. The method according to claim 3, **characterized in that** the light signals (18) cause the display background (28) of the LCD display element (21) to be represented in the same color or in the same grayscale value as the spurious information to be masked out (S4).

5. The method according to claim 2, whereby the display element (21) is illuminated directly with the light signals (18), **characterized in that** the display element is a color display element (21), the light signals (18) are color light signals, and the spurious information is masked out (S4) by the color display element (21) being illuminated with the color light signals (18) (S3) which are so coordinated (S3) with a color in which the spurious information is displayed on the color display element (21) that the spurious information is not recognizable to the viewer (S4).

6. The method according to claim 2, whereby the display element (21) is illuminated directly with the light signals (18), **characterized in that** the light signals (18) are infrared light signals (18), and that the spurious information is masked out (S4) by a foil (29) covering the display element (21) being illuminated directly with the infrared light signals (18) such that the foil (20) is optically opaque to the spurious information (S4).

7. The method according to any of claims 1 to 6, **characterized in that** the useful information (25) is modulated by the displaying (S1) of the display data, and the light signals (18) are emitted to the display element (21) such that the useful information (25) is demodulated and thereby becomes recognizable to the viewer (S5).

8. The method according to claim 7, **characterized in that** the useful information (25) is time-modulated through sequential displaying (S1) of the display data, and the light signals (18) are emitted to the display element (21) in the form of sequential light pulses, wherein the display data are displayed (S1) sequentially at such a high frequency that the useful information (25) is not recognizable in the displayed display data without sending (S2) of the sequential light pulses.

9. The method according to claim 8, **characterized in that** the useful information (25) is time-modulated upon the displaying (S1) of the display data such that the useful information (25) demodulated through the light pulses (18) is recognizable (S5) on the display element (21) statically or time-varyingly.

10. The method according to claim 8 or 9, whereby the display element (21) is illuminated directly with the light signals (18), **characterized in that** the useful information (25) is color-modulated through colored displaying (S1) of the display data, and **in that** the light signals are emitted (S2) to the display element (21) in the form of color light signals (18), wherein the display data are displayed (S1) in color such that the useful information (25) is not recognizable in the colored display data without emission (S2) of the color light signals (18).

11. The method according to any of claims 1 to 10, **characterized in that** the display data comprise the useful information (25) such that the useful information (25) recognizable to the viewer has a predefined temporal movement pattern (S5).

12. The method according to any of claims 1 to 11, **characterized in that** the display data comprise several separate pieces of useful information (25) such that the several pieces of useful information (25) are recognizable separately at the same time to the viewer.

13. A portable data carrier (10), comprising an interface for connection to a terminal device (20), **characterized by** a light signal unit (12) which is adapted to emit to the terminal device (20) light signals (18) intended for a display element (21) of a terminal device (20) connected to the data carrier (10), such that a viewer of the display element (21) can recognize useful information (25) comprised in the display data of the display element (21), said information not being recognizable without the light signals (18), whereby the data carrier (10) is adapted to inject the light signals (18) into an optical interface of the terminal device (20) to influence a driving of the display element (21) there, or to illuminate the display element (21) directly with the light signals (18).

14. The portable data carrier (10) according to claim 13, **characterized by** a data communication interface (14) for transfer of display data to a terminal device (20) connected to the data carrier (10), and a communication unit (17) which is adapted to transfer display data via the data communication interface (14) to the terminal device (20) which are intended for displaying through the display element (21) of the terminal device (20) and comprise a one-time password as the useful information (25).

15. A terminal device (20), comprising an interface (24) for connection to a portable data carrier (10) according to either of claims 13 to 14 and a display element (21) for displaying display data comprising useful information (25), **characterized in that** the terminal device (20) is adapted to cooperate with the portable data carrier according to a method according to any of claims 1 to 12.

## Revendications

1. Procédé destiné à afficher une information utile (25) sur un élément d'affichage (21) d'un dispositif de terminal (20), **caractérisé par** les étapes :
- affichage (S1) de données d'affichage comprenant l'information utile (25) sur l'élément d'affichage (21); et
- envoi (S2) de signaux lumineux (18) par l'intermédiaire d'une unité de signaux lumineux (12) d'un support de données portable (10) au dispositif de terminal (20);
l'information utile (25) n'étant pas reconnaissable pour un observateur de l'élément d'affichage (21) sans l'envoi (S2) des signaux lumineux (18), les données d'affichage étant affichées (S1) de telle manière et les signaux lumineux (18) étant envoyés (S2) de telle manière qu'un observateur de l'élément d'affichage (21) peut reconnaître (S5) l'information utile (25), et
les signaux lumineux (18) étant entrés dans une interface optique du dispositif de terminal (20) afin d'y influencer une commande de l'élément d'affichage (21), ou l'élément d'affichage (21) étant éclairé directement avec les signaux lumineux (18).

2. Procédé selon la revendication 1, **caractérisé en ce que** des données d'affichage qui comprennent une information d'anomalie en plus de l'information utile (25) sont affichées (S1) sur l'élément d'affichage (21), l'affichage (S1) des données d'affichage et l'envoi (S2) des signaux lumineux (18) étant accordés (S3) entre eux de telle manière que les signaux lumineux (18) ont l'effet (S4) de masquer l'information d'anomalie figurant parmi les données d'affichage affichées.

3. Procédé selon la revendication 2, **caractérisé en ce que** l'élément d'affichage est un élément d'affichage LCD (21) et **en ce que** l'information d'anomalie est masquée (S4) par le fait que les signaux lumineux (18) ont l'effet qu'un arrière-plan d'affichage (28) de l'élément d'affichage LCD (21) est représenté de telle manière que, pour un observateur, l'information d'anomalie n'est pas reconnaissable devant l'arrière-plan d'affichage (28) de l'élément d'affichage LCD (21), les signaux lumineux (18) étant entrés dans une interface optique du dispositif de terminal afin d'y influencer une commande de l'élément d'affichage (21).

4. Procédé selon la revendication 3, **caractérisé en ce que** les signaux lumineux (18) ont l'effet que l'arrière-plan d'affichage (28) de l'élément d'affichage LCD (21) est représenté dans la même couleur ou dans le même niveau de gris que l'information d'anomalie (S4) à masquer.

5. Procédé selon la revendication 2, l'élément d'affichage (21) étant directement éclairé avec les signaux lumineux (18), **caractérisé en ce que** l'élément d'affichage est un élément d'affichage en couleur (21), les signaux lumineux (18) sont des signaux lumineux en couleur, et l'information d'anomalie est masquée (S4) par le fait que l'élément d'affichage en couleur (21) est éclairé (S2) avec les signaux lumineux en couleur (18) qui sont accordés (S3) de telle manière avec une couleur dans laquelle l'information d'anomalie est affichée sur l'élément d'affichage en couleur (21) que l'information d'anomalie n'est pas reconnaissable (S4) pour l'observateur.

6. Procédé selon la revendication 2, l'élément d'affichage (21) étant directement éclairé avec les signaux lumineux (18), **caractérisé en ce que** les signaux lumineux (18) sont des signaux lumineux infrarouges (18), et **en ce que** l'information d'anomalie est masquée (S4) par le fait qu'un film (29) recouvrant l'élément d'affichage (21) est éclairé directement de telle manière avec les signaux lumineux infrarouges (18) que le film (20) est optiquement impénétrable (S4) pour l'information d'anomalie.

7. Procédé selon une des revendications de 1 à 6, **caractérisé en ce que** l'information utile (25) est modulée par l'affichage (S1) des données d'affichage et **en ce que** les signaux lumineux (18) sont envoyés de telle manière à l'élément d'affichage (21) que l'information utile (25) est démodulée et devient ainsi reconnaissable (S5) pour l'observateur.

8. Procédé selon la revendication 7, **caractérisé en ce que** l'information utile (25) est modulée dans le temps par affichage séquentiel (S1) des données d'affichage et **en ce que** les signaux lumineux (18) sont envoyés à l'élément d'affichage (21) sous forme d'impulsions lumineuses séquentielles, les données d'affichage étant affichées séquentiellement (S1) à une fréquence si élevée que, sans envoi (S2) des impulsions lumineuses séquentielles, l'information utile (25) n'est pas reconnaissable parmi les données d'affichage affichées.

9. Procédé selon la revendication 8, **caractérisé en ce que** l'information utile (25) est modulée dans le temps de telle manière lors de l'affichage (S1) des données d'affichage que l'information utile (25) démodulée par les signaux lumineux (18) est reconnaissable (S5) sur l'élément d'affichage (21) de manière statique ou variant dans le temps.

10. Procédé selon la revendication 8 ou 9, l'élément d'affichage (21) étant directement éclairé avec les signaux lumineux (18), **caractérisé en ce que** l'information utile (25) est modulée en couleur par affichage en couleur (S1) des données d'affichage et **en ce que** les signaux lumineux sont envoyés (S2) à l'élément d'affichage (21) sous forme de signaux lumineux en couleur (18), les données d'affichage étant affichées (S1) en couleur de telle manière que, sans envoi (S2) des signaux lumineux en couleur (18), l'information utile (25) n'est pas reconnaissable dans les données d'affichage en couleur.

11. Procédé selon une des revendications de 1 à 10, **caractérisé en ce que** les données d'affichage comprennent l'information utile (25) de telle manière que l'information utile (25) reconnaissable par l'observateur présente (S5) un modèle donné de mouvement dans le temps.

12. Procédé selon une des revendications de 1 à 11, **caractérisé en ce que** les données d'affichage comprennent de telle manière plusieurs informations utiles (25) séparées que les plusieurs informations utiles (25) sont reconnaissables en même temps séparément par l'observateur.

13. Support de données portable (10) comprenant une interface pour la connexion avec un dispositif de terminal (20), **caractérisé par** une unité de signaux lumineux (12) qui est configurée pour envoyer de telle manière au dispositif de terminal (20) des signaux lumineux (18) destinés à un élément d'affichage (21) d'un dispositif de terminal (20) connecté au support de données (10) qu'un observateur de l'élément d'affichage (21) peut reconnaître une information utile (25) comprise dans les données d'affichage de l'élément d'affichage (21), laquelle information utile n'est pas reconnaissable sans les signaux lumineux (18), le support de données (10) étant configuré pour entrer les signaux lumineux (18) dans une interface optique du dispositif de terminal (20) afin d'y influencer une commande de l'élément d'affichage (21), ou pour éclairer directement l'élément d'affichage (21) avec les signaux lumineux (18).

14. Support de données portable (10) selon la revendication 13, **caractérisé par** une interface de communication de données (14) pour la transmission de données d'affichage à un dispositif de terminal (20) connecté au support de données (10) et par une unité de communication (17) qui est configurée pour transmettre au dispositif de terminal (20), par l'intermédiaire de l'interface de communication de données (14), des données d'affichage qui sont destinées à l'affichage par l'élément d'affichage (21) du dispositif de terminal (20) et comprennent en tant qu'information utile (25) un mot de passe à usage unique.

15. Dispositif de terminal (20), comprenant une interface (24) pour la connexion avec un support de données portable (10) selon une des revendications 13 ou 14 et un élément d'affichage (21) pour l'affichage de données d'affichage comprenant une information utile (25), **caractérisé en ce que** le dispositif de terminal (20) est configuré pour agir en concomitance avec le support de données portable suivant un procédé selon une des revendications de 1 à 12.
